# DEMANDE DE BREVET EUROPEEN

(11) **EP 1 728 537 A1**
(43) Date de publication de la demande: **06.12.2006**
(21) Numéro de dépôt: 06010836.2
(22) Date de dépôt: 26.05.2006
(51) Int. Cl.: A63C 17/12

(54) **Système de réglage rapide pour un jeu basculant**

(30) Priorité: 02.06.2005 FR 0505681
(71) Demandeur: Lebreton, Roger, 35640 Chelun (FR)
(72) Inventeur: Lebreton, Roger, 35640 Chelun (FR)

(57) **Abrégé**

Système rapide de réglage général pour un jeu à moteur qui se dirige par son basculement sur roues droites et obliques fixes.
L'invention concerne le réglage général d'un jeu mécanique afin que chaque utilisateur puisse l'adapter par rapport à ses goûts et son gabarit.
Des supports (1) de poignées d'accélération et de freins se placent sur la rampe d'appui (5). Ces supports se déplacent et se bloquent à l'aide de pièces de jonction (4).
Un des supports est démontable (9) afin de permettre la mise en place de la poignée d'accélération.
Ce système permet aussi de régler l'oblique des roues directrices et le basculement.

## Description

La présente invention concerne un système de réglage rapide et général pour un jeu à moteur qui se dirige par son basculement sur roues droites et obliques fixes. (Brevet Français N° 9212562 et Brevet Européen N° 0916373).

Les pistes et les terrains où l'on utilise ce jeu sont différents, en particulier au point de vue nivellement et surface.

Le gabarit des utilisateurs peut être d'une différence relativement importante.

Cet ensemble de réglage assure une meilleure utilisation de ce jeu en permettant de placer toutes les parties prévues à cet effet à un endroit adéquat à la piste, au goût et à la taille de l'utilisateur.

Ce système permet un réglage rapide et précis. Il permet aussi de régler la partie gauche différemment de la partie droite et d'inverser rapidement si la solution choisie ne convient pas. Il convient aussi, par exemple, de régler les roues directrices plus obliques et de mettre plus de basculement pour faire du slalom que pour faire de la vitesse.

Le réglage rapide des supports de poignées d'accélération et de frein permet aux utilisateurs de tailles différentes de se servir du même jeu par intermittence.

L'oblique des roues directrices et le basculement étaient calculés jusqu'à présent pour être fixés définitivement à un emplacement moyen.

La rampe réglable en hauteur ne permet pas de placer une poignée plus haute que l'autre, ne permet pas de changer l'écartement entre les poignées ni la distance par rapport au corps ; le système de réglage tel que revendiqué dans la revendication 1 en offre la possibilité.

La poignée d'accélération à utiliser doit être une poignée que l'on tient à pleine main, genre poignée de vélomoteur ou de moto. Elle ne peut quasiment être emboîtée qu'après le cintrage de la rampe, d'où l'obligation d'utiliser une rampe en deux parties.

Une rampe d'un seul tenant qui permet d'emboîter une poignée d'accélération oblige à utiliser un tube d'un trop petit diamètre.

L'utilisation des supports de poignées permet de mettre en place une rampe d'un seul tenant et d'un diamètre assurant une grande solidité.

L'utilisation d'une manette du genre manette de quad, reliée à la rampe par un collier, permet de déplacer ladite manette, mais mobilise un doigt, ce qui est un gros handicap pour pousser ou tirer la rampe dans les virages.

Le support de la poignée d'accélération peut se placer à l'avant ou à l'arrière, ce qui permet de placer cette poignée selon sa convenance en particulier pour les gauchers.

Le contrepoids peut être avancé ou reculé de façon à donner plus de poids sur les roues directrices ou sur les roues motrices.

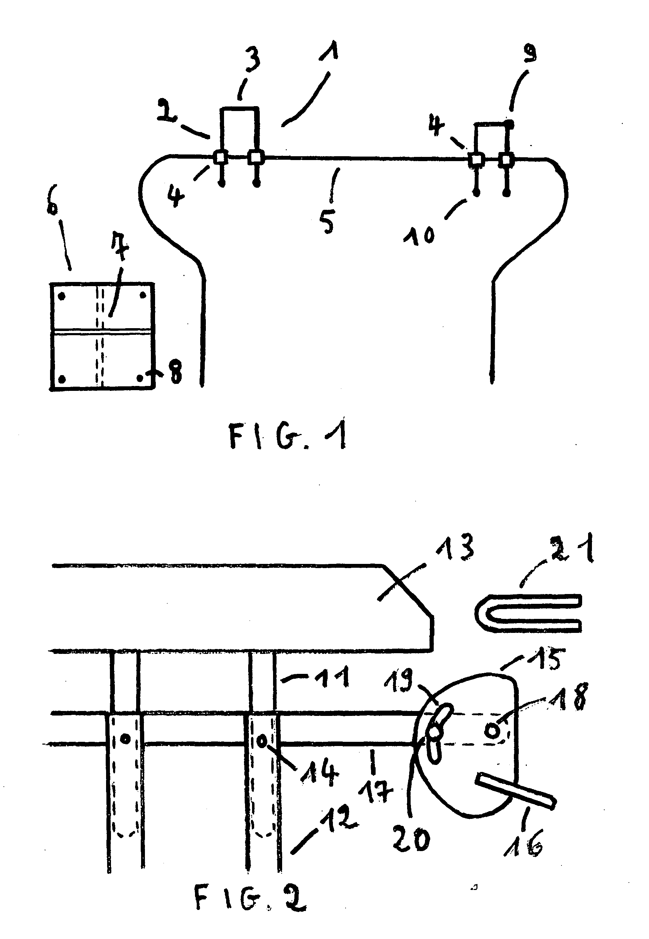

La figure 1 représente les supports de poignées d'accélération et de freins placés sur la rampe ainsi que les pièces de jonction.

La figure 2 représente les supports du contrepoids qui s'emboîtent dans les tubes du châssis, une plaque de réglage des roues obliques et une pièce intermédiaire pour surélever ces mêmes roues.

Les supports (1) de poignées d'accélération et de freins se composent de deux montants (2) et d'une barre horizontale (3) où se placent les poignées.

Les montants se déplacent dans un ensemble de pièces de jonction (4) et ces pièces de jonction se déplacent sur la rampe (5) .

Ces pièces de jonction sont composées de trois parties de même forme dont les deux parties extérieures comportent une ligne concave d'un côté et la partie intérieure (6) comporte une ligne concave (7) de chaque côté en forme de croix.

Une perforation (8) aux coins de chaque élément permet le passage de boulons afin de resserrer l'ensemble sur les montants et sur la rampe.

Les parties concaves sont presque du même diamètre que celles du montant et de la rampe ce qui permet de resserrer le tout avec précision. Selon une variante non illustrée, les pièces de jonction se composent de deux cylindres fixés en forme de croix et ouverts sur leur longueur. Les cylindres comportent une partie plate extérieure de chaque côté De l'ouverture. Ces parties plates sont perforées afin d'y placer des boulons pour resserrer le tout. Les cylindres doivent être suffisamment flexibles afin de pouvoir les emboîter sur la rampe.

L'un des montants et la partie horizontale qui supportent la poignée d'accélération sont démontables (9) afin de pouvoir emboîter ladite poignée d'accélération.

Il convient de placer des boules de mousse ou de caoutchouc (10) à chaque extrémité inférieure des montants par sécurité.

Les supports (11) du contrepoids s'emboîtent à l'intérieur des tubes du châssis (12). Le contrepoids (13) est bloqué lorsqu'il est à la position souhaitée avec un boulon qui traverse une perforation dans la partie supérieure du châssis (14).

Les pièces (15) où sont fixés les axes (16) des roues directrices sont de préférence des plaques. Ces plaques (15) pivotent sur la barre (17) du châssis. Elles comportent une perforation (18) de la grosseur du boulon qui la traverse et une perforation allongée et courbe (19).

Chacun des deux boulons (20) qui traversent les perforations sont fixés sur la barre du châssis (17).

Une perforation unique de la barre et de la pièce qui pivote, ainsi que l'utilisation d'un seul boulon sont possibles, mais risquent d'être insuffisantes en ce qui concerne le blocage.

Les boulons (20) qui dépassent au-dessus de l'ensemble permettent aux plaques (15) d'être mises plus ou moins hautes afin de pouvoir placer entre la barre (17) du châssis et ladite plaque (15) une ou plusieurs pièces intermédiaires (21). Deux écrous bloquent l'ensemble.

A titre d'exemple les boulons peuvent dépasser de deux centimètres et les pièces intermédiaires peuvent avoir une épaisseur de trois millimètres, un demi-centimètre et un centimètre. La position de basculement la plus faible étant lorsqu'il n'y a pas de pièces intermédiaires.

Les pièces intermédiaires (21) sont à peu près de la longueur là où la plaque porte sur la barre du châssis, et sont ouvertes dans le sens de la longueur. Ces pièces intermédiaires, d'un seul tenant, se glissent facilement de chaque côté des boulons en n'ayant qu'à desserrer les écrous, alors que l'utilisation de rondelles nécessiterait l'enlèvement total des écrous et de la plaque.

Selon une variante, un écrou placé sur chaque boulon entre la barre du châssis (17) et la plaque pivotante (15), permet de remonter et de redescendre ladite plaque. Les écrous placés au-dessus de la plaque et qui sont vissés ou dévissés en même temps, bloquent l'ensemble.

Les boulons peuvent être remplacés par des tiges filetées.

Des boulons ou des tiges filetées vissés dans la barre du châssis, et bloqués dessous, permettent de placer toutes les roues de niveau lors de la fabrication, afin de faciliter celle-ci.

Le basculement le plus faible obtenu l'est, dans ce cas-là, lorsque les écrous ou les premières pièces intermédiaires sont placés entre la barre du châssis et les deux plaques pivotantes.

La mise en place de tiges filetées, relativement longues, permet de remonter les écrous plus haut.

Ceci donne la possibilité de placer éventuellement des roues plus grandes, tout en conservant la même marge de réglage.

Le système de réglage tel que revendiqué dans la revendication 1 ne se limite pas aux exemples donnés.

## Revendications

1. Système rapide de réglage général pour un jeu à moteur qui se dirige par son basculement sur roues droites et obliques fixes, **caractérisé en ce que** ce système se compose de deux parties : que la première partie comporte des supports (1) de poignées d'accélération et de freins qui se déplacent et se bloquent dans des pièces de jonction (4) et que ces pièces de jonction se déplacent et se bloquent sur la rampe (5) afin de placer les poignées aux endroits souhaités ;
Que la deuxième partie comporte des pièces (15) où sont fixés les axes (16) qui supportent les roues directrices, que ces pièces pivotent sur la barre (17) du châssis et qu'elles se bloquent à la hauteur souhaitée, permettant ainsi de régler l'oblique des roues directrices et le basculement du jeu.

2. Système rapide de réglage général selon la revendication 1, **caractérisé en ce que** les supports (1) de poignées d'accélération et de freins se composent de deux montants (2) et d'une partie horizontale (3).

3. Système rapide de réglage général selon la revendication 1, **caractérisé en ce que** le support de la poignée d'accélération comporte une partie horizontale qui se démonte du montant (9) de façon à pouvoir emboîter la poignée d'accélération.

4. Système rapide de réglage général selon la revendication 1, **caractérisé en ce que** les deux parties extérieures des pièces de jonction comportent une ligne concave sur un côté.

5. Système rapide de réglage général selon la revendication 1, **caractérisé en ce que** la partie centrale (6) des pièces de jonction comporte une ligne concave de chaque côté en forme de croix (7).

6. Système rapide de réglage général selon la revendication 1, **caractérisé en ce que** les pièces de jonction (4) comportent une perforation à chaque coin (8) afin de permettre le passage de boulons pour bloquer l'ensemble sur les montants et sur la rampe.

7. Système rapide de réglage général selon la revendication 1, **caractérisé en ce que** les pièces de jonction sont deux cylindres fixés en forme de croix, ouverts sur leur longueur et que lesdits cylindres comportent une partie plate perforée permettant le passage de boulons pour bloquer l'ensemble sur les montants et sur la rampe.

8. Système rapide de réglage général selon la revendication 1, **caractérisé en ce que** les plaques (15) qui pivotent sur la barre (17) du châssis comportent une perforation (18) de la grosseur du boulon qui la traverse et une perforation allongée et courbe (19).

9. Système rapide de réglage général selon la revendication 1, **caractérisé en ce que** la ou les pièces intermédiaires (21) sont des pièces d'un seul tenant ouvertes dans le sens de la longueur, afin de n'avoir qu'à desserrer les écrous pour les placer.

10. Système rapide de réglage général selon la revendication 1, **caractérisé en ce que** les boulons (20) dépassent suffisamment au-dessus des plaques (15), de façon à pouvoir placer entre lesdites plaques et la barre du châssis (17), des pièces intermédiaires (21) ou un écrou permettant une course adéquate.
